# EUROPÄISCHE PATENTANMELDUNG

(11) **EP 0 593 965 A1**
(43) Veröffentlichungstag der Anmeldung: **27.04.1994**
(21) Anmeldenummer: 93115985.9
(22) Anmeldetag: 04.10.1993
(51) Int. Cl.: C09B 67/00, C09B 62/04

(54) **Mischungen von Reaktivfarbstoffen**

(30) Priorität: 14.10.1992 DE 4234621
(71) Anmelder: BASF Aktiengesellschaft, D-67063 Ludwigshafen (DE)
(72) Erfinder: Krallmann, Reinhold, D-6719 Weisenheim (DE); Laws, Regina, D-6148 Heppenheim (DE); Schrott, Wolfgang, Dr., D-6737 Boehl-Iggelheim (DE)

(57) **Zusammenfassung**

Farbstoffmischungen, enthaltend den Farbstoff der Formel 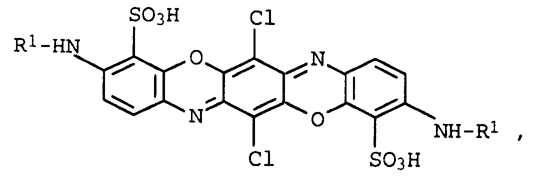
in der R¹ den Rest der Formel 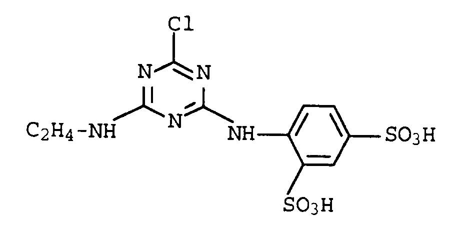
bedeutet,
sowie einen Farbstoff der Formel 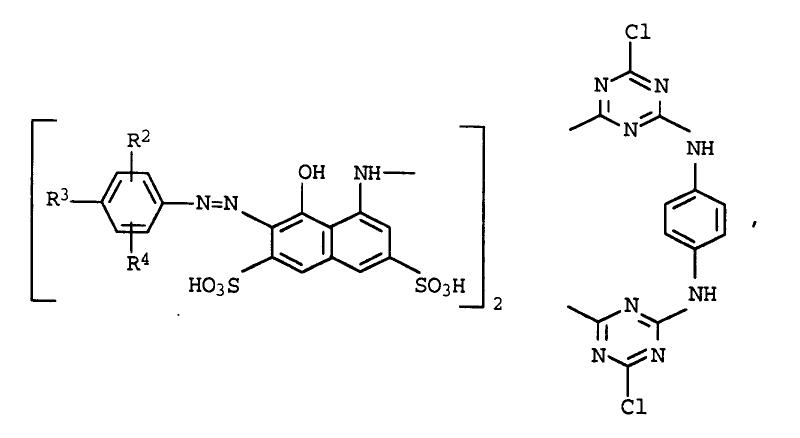
in der
einer der beiden Reste R² und R³ Methoxy und der andere Hydroxysulfonyl und
- R⁴: Wasserstoff oder Hydroxysulfonyl bedeuten,
sowie deren Verwendung zum Färben oder Bedrucken von Hydroxygruppen oder Stickstoffatome aufweisenden organischen Substraten.

## Beschreibung

Die vorliegende Erfindung betrifft neue Farbstoffmischungen, enthaltend den Farbstoff der Formel I 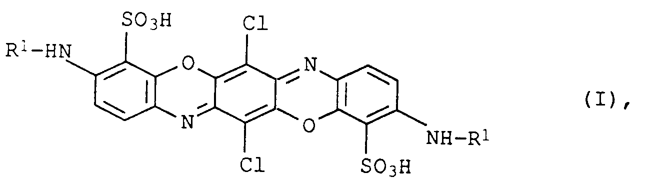
in der R¹ jeweils den Rest der Formel 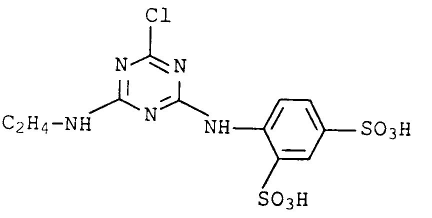
bedeutet,
sowie einen Farbstoff der Formel II 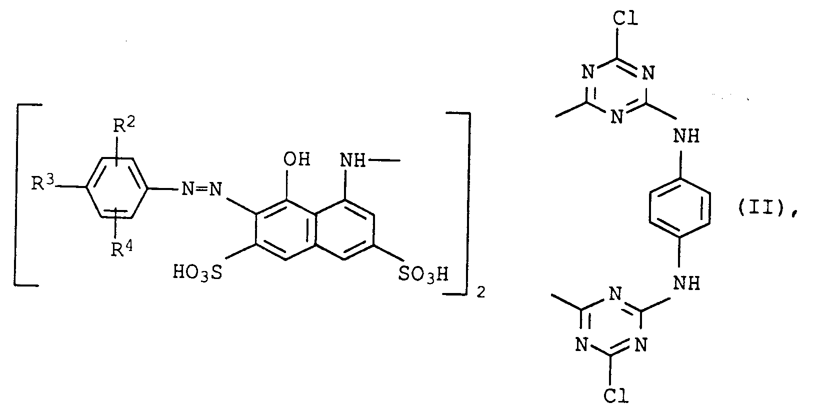
in der
einer der beiden Reste R² und R³ Methoxy und der andere Hydroxysulfonyl und
- R⁴: Wasserstoff oder Hydroxysulfonyl bedeuten,
sowie deren Verwendung zum Färben oder Bedrucken von Hydroxygruppen oder Stickstoffatome aufweisenden organischen Substraten.

Aufgabe der vorliegenden Erfindung war es, neue blaue Farbstoffmischungen von Reaktivfarbstoffen bereitzustellen. Die neuen Farbstoffmischungen sollten gute Gebrauchsechtheiten aufweisen und insbesondere über eine gute Löslichkeit verfügen. Außerdem sollten die neuen Mischungen eine hohe Brillanz zeigen.

Demgemäß wurden die eingangs näher bezeichneten Farbstoffmischungen gefunden.

Bevorzugt sind Farbstoffmischungen, enthaltend einen Farbstoff der Formel IIa 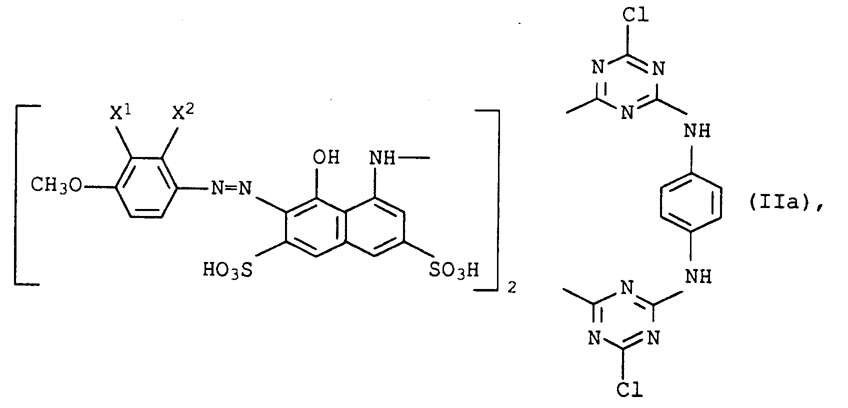
in der einer der beiden Reste X¹ und X² Wasserstoff und der andere Hydroxysulfonyl bedeuten.

Besonders bevorzugt sind Farbstoffmischungen, enthaltend einen Farbstoff der Formel IIa, in der X¹ Hydroxysulfonyl und X² Wasserstoff bedeuten.

Die neuen Farbstoffmischungen enthalten im allgemeinen, jeweils bezogen auf das Gesamtgewicht der Farbstoffe, 80 bis 99 Gew.-%, vorzugsweise 85 bis 95 Gew.-%, Farbstoff der Formel I und 1 bis 20 Gew.-%, vorzugsweise 5 bis 15 Gew.-%, Farbstoff der Formel II.

Besonders zu nennen sind Farbstoffmischungen, enthaltend, jeweils bezogen auf das Gesamtgewicht der Farbstoffe, ca. 90 Gew.-% Farbstoff I und ca. 10 Gew.-% Farbstoff II.

Bei den Farbstoffen der Formel I und II handelt es sich um bekannte Produkte. Der Farbstoff der Formel I ist z.B. aus der US-A-3 996 221 bekannt. Farbstoffe der Formel II sind in der EP-A-34 287 beschrieben.

Die Herstellung der erfindungsgemäßen Farbstoffmischungen erfolgt auf an sich bekanntem Weg, z.B. durch Mischen der jeweiligen Partner im genannten Gewichtsverhältnis. Gegebenenfalls können den neuen Mischungen weitere Komponenten, z.B. Hilfsmittel, wie Stellmittel, Dispergiermittel oder Entstaubungsmittel, zugesetzt werden. Es ist auch möglich, bereits fertige Farbstoffpräparationen der jeweiligen Partner oder fertige Farbstoffpräparationen mit reinen Farbstoffen abzumischen.

Die neuen Farbstoffmischungen eignen sich in vorteilhafter Weise zum Färben oder Bedrucken von Hydroxygruppen oder Stickstoffatome aufweisenden organischen Substraten. Solche Substrate sind beispielsweise Leder oder Fasermaterial, das überwiegend natürliche oder synthetische Polyamide oder natürliche oder regenerierte Cellulose enthält. Vorzugsweise eignen sich die neuen Farbstoffe zum Färben und Bedrucken von Textilmaterial auf der Basis von Wolle oder insbesondere von Baumwolle. Man erhält Ausfärbungen in brillanten blauen Farbtönen.

Insbesondere auf Substraten auf Basis von Cellulose werden farbstarke Färbungen mit guten Gebrauchsechtheiten erhalten. Die neuen Farbstoffmischungen, die insbesondere für das Ausziehverfahren (Färbetemperatur; ca. 80°C) geeignet sind, weisen eine gute Löslichkeit in Wasser auf und zeigen eine hohe Brillanz. Dies ist überraschend, da es sich bei den Farbstoffen der Formel II um Reaktivfarbstoffe handelt, die in der Regel nur eine geringe Brillanz aufweisen.

Die folgenden Beispiele sollen die Erfindung näher erläutern.

Folgende Farbstoffe kamen zur Anwendung:

### Farbstoff 1:

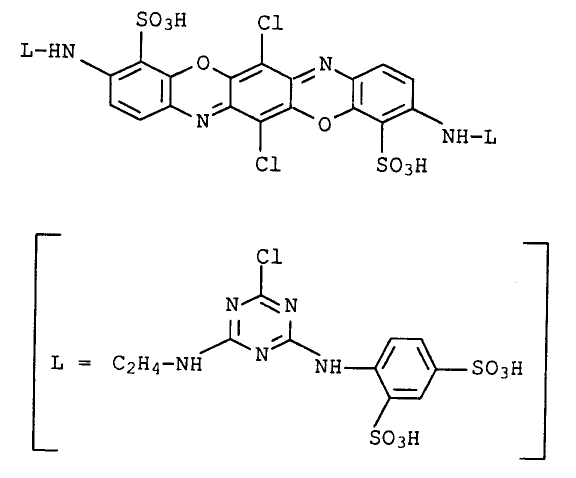

### Farbstoff 2:

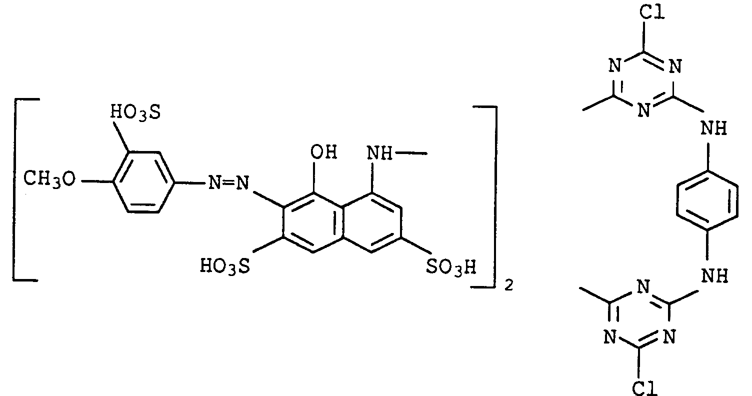

### Farbstoff 3:

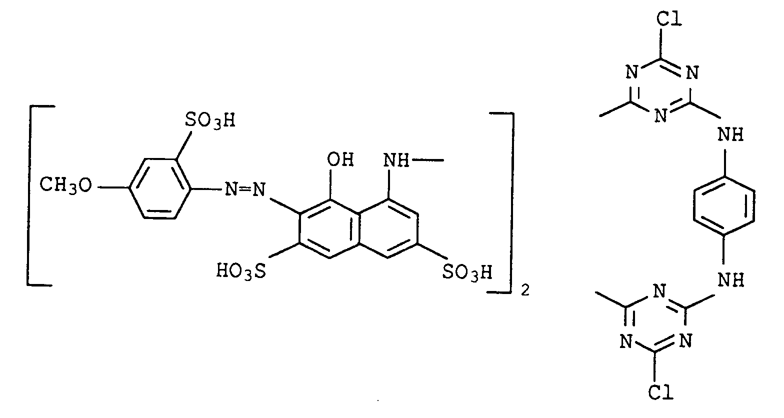

### Beispiel 1

100 g eines Baumwollgarns wurden in einem Bad gefärbt, das 1000 ml Wasser, 3,5 g einer Mischung aus 3,2 g Farbstoff 1 und 0,3 g Farbstoff 2, 5 g Natriumcarbonat, 1 g 32 gew.-%ige Natronlauge und 50 g Natriumsulfat-dekahydrat enthielt. Man begann mit dem Färben bei 30°C, erhöhte die Temperatur innerhalb von 30 Minuten auf 80°C und färbte noch weitere 60 Minuten bei dieser Temperatur. Nach dem Abkühlen wurde das Garn gespült und kochend geseift. Man erhielt eine brillante, rotstichige Blaufärbung mit ausgezeichneten Echtheiten.

### Beispiel 2

100 g eines Baumwollgewebes wurden in einem Bad gefärbt, das 3000 ml Wasser, 4 g einer Mischung aus 3,5 g Farbstoff 1 und 0,5 g Farbstoff 3, 60 g Natriumcarbonat und 150 g Natriumchlorid enthielt. Man begann mit dem Färben bei Raumtemperatur, erhöhte die Temperatur innerhalb 30 Minuten auf 80°C und färbte noch weitere 60 Minunten bei dieser Temperatur. Nach dem Abkühlen wurde das Gewebe gespült und kochend geseift. Man erhielt eine brillante, rotstichige Blaufärbung mit ausgezeichneten Echtheiten.

## Patentansprüche

1. Farbstoffmischungen, enthaltend den Farbstoff der Formel I 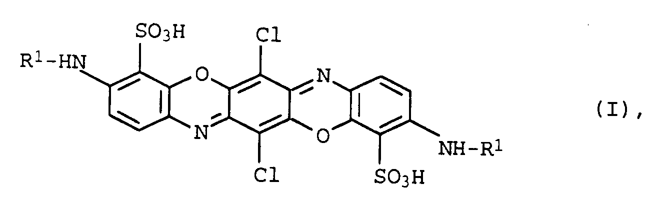 in der R¹ jeweils den Rest der Formel 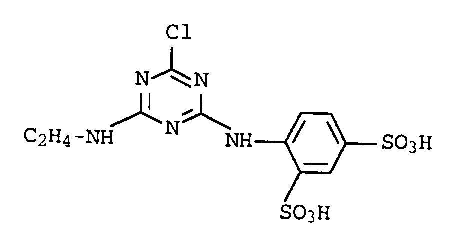 bedeutet,
sowie einen Farbstoff der Formel II 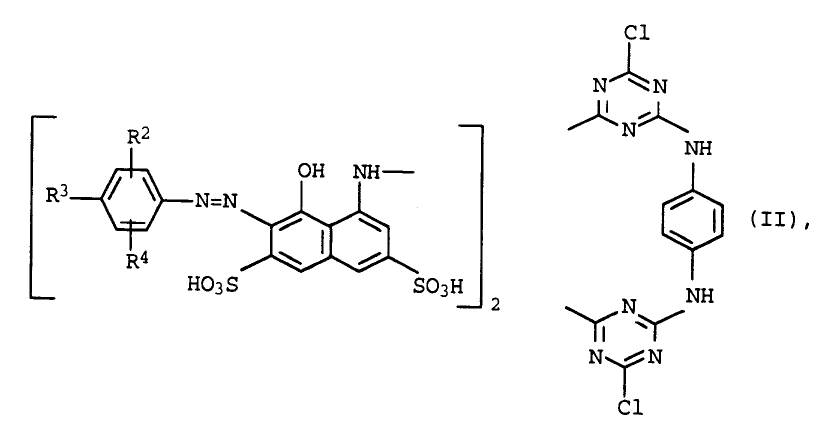 in der
einer der beiden Reste R² und R³ Methoxy und der andere Hydroxysulfonyl und
R⁴ Wasserstoff oder Hydroxysulfonyl bedeuten.

2. Farbstoffmischungen nach Anspruch 1, enthaltend einen Farbstoff der Formel IIa 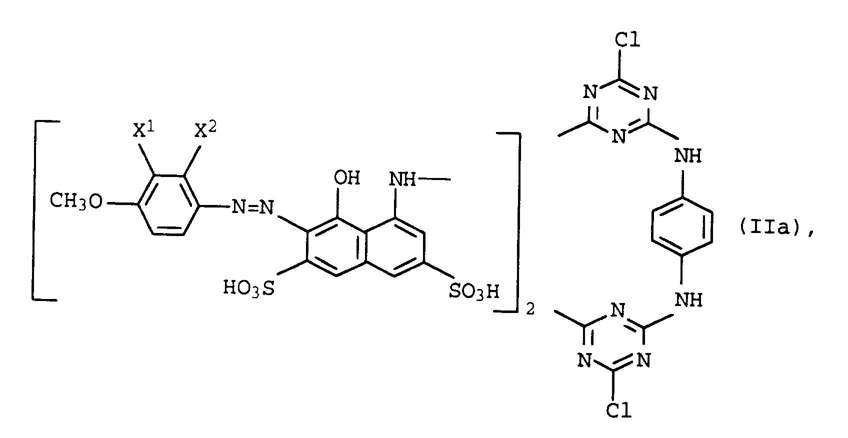 in der einer der beiden Reste X¹ und X² Wasserstoff und der andere Hydroxysulfonyl bedeuten.

3. Farbstoffmischungen nach Anspruch 1, enthaltend, jeweils bezogen auf das Gesamtgewicht der Farbstoffe, 80 bis 99 Gew.-% Farbstoff der Formel I und 1 bis 20 Gew.-% Farbstoff der Formel II.

4. Verwendung der Farbstoffmischungen gemäß Anspruch 1 zum Färben oder Bedrucken von Hydroxygruppen oder Stickstoffatome aufweisenden organischen Substraten.
